# EUROPÄISCHE PATENTSCHRIFT

(11) **EP 2 757 066 B1**
(45) Veröffentlichungstag und Bekanntmachung des Hinweises auf die Patenterteilung: **31.10.2018**
(21) Anmeldenummer: 13152183.3
(22) Anmeldetag: 22.01.2013
(51) Int. Cl.: B29D 99/00, B66C 23/64, B29C 63/26, B23K 37/00, B29C 37/00

(54) **Verfahren zur Herstellung einer Tragstruktur**
Method for producing a supporting structure
Procédé de fabrication d'une structure porteuse

(43) Veröffentlichungstag der Anmeldung: 23.07.2014
(73) Patentinhaber: Trumpf Sachsen GmbH, 01904 Neukirch (DE); TRUMPF Werkzeugmaschinen GmbH + Co. KG, 71254 Ditzingen (DE)
(72) Erfinder: Harnisch, Gunter, 01936 Königsbrück (DE); Knobel Carsten, 02689 Sohland (DE); Haas Wilfried, 71254 Ditzingen (DE); Wolfrum Matthias, 71254 Ditzingen (DE); Wunderlich Tom, 71297 Mönsheim (DE); Herbst Jörg, 71254 Ditzingen (DE); Schütze Eckart, 46286 Dorsten (DE); Schütze Martin, 59494 Soest (DE); Schütze Rainer, 38110 Braunschweig (DE)
(74) Vertreter: Kohler Schmid Möbus Patentanwälte

(56) Entgegenhaltungen:
- EP-A2- 0 968 955
- DE-A1- 19 508 193
- DE-A1-102008 013 203
- US-B1- 6 786 233

## Beschreibung

Die Erfindung betrifft ein Verfahren zur Herstellung einer Tragstruktur einer Werkzeugmaschine, insbesondere einer Führungseinrichtung für eine Bewegungseinheit einer Werkzeugmaschine, mit einer tragenden Grundstruktur, die sich in Längsrichtung der Tragstruktur, insbesondere der Führungseinrichtung, erstreckt sowie mit einem mit der tragenden Grundstruktur verbundenen Profilträger, der sich gleichfalls in Längsrichtung der Tragstruktur, insbesondere der Führungseinrichtung, erstreckt und der die tragende Grundstruktur versteift, wobei der Profilträger ein Grundprofil aus Metall aufweist, das als Hohlprofil mit einer Profilwand mit geschlossenem Wandquerschnitt ausgebildet ist.

Profilträger der eingangs genannten Art sind als hybride Halbzeuge vorzugweise für Anwendungsfälle bestimmt, in denen eine möglichst hohe Steifigkeit einer tragenden Struktur mit einer möglichst geringen Eigenmasse kombiniert sein soll.

Ein Profilträger und ein Verfahren zu dessen Herstellung sind in DE 10 2008 013 203 A1 offenbart. Ein Profilträger mit einem als Hohlprofil ausgebildeten Grundprofil aus Metall und mit Verstärkungslagen aus einem Faser-Kunststoff-Verbund dient im Falle des Standes der Technik zur Realisierung eines Auslegers einer Baumaschine, insbesondere eines Krans. Das metallene Grundprofil besitzt einen mehreckigen geschlossenen Querschnitt. Einander gegenüberliegende Wandteile der Profilwand des Grundprofils sind an ihrer Innenseite mit jeweils einer Verstärkungslage versehen. Zur Herstellung der für die Versteifungswirkung der Verstärkungslagen unerlässlichen Verbindung zwischen den Verstärkungslagen und der Profilwand des Grundprofils sind die Verstärkungslagen mittels ihres Kunststoffanteils mit dem jeweils zugeordneten Wandteil der Profilwand verklebt. Zur Verbesserung der Haftung der Verstärkungslagen an der Profilwand werden die betreffenden Wandteile der Profilwand vor dem Aufbringen des die Verstärkungslagen bildenden Faser-Kunststoff-Verbundes vorbehandelt, beispielsweise entfettet und sandgestrahlt.

Weitere Profilträger und Verfahren zur Herstellung von Profilträgern sind offenbart in EP 0 968 955 A2, US 6,786,233 B1 und DE 195 08 193 A1.

EP 0 968 955 A2 beschreibt die Herstellung eines Profilträgers mit einem metallenen Grundprofil, dessen Profilwand einen geschlossenen Wandquerschnitt besitzt. Das Grundprofil wird zu einem Zeitpunkt, zu welchem der Wandquerschnitt seiner Profilwand bereits geschlossen ist, an seiner Außenseite versteift. Zu diesem Zweck werden auf das Grundprofil zwei Lagen aus faserverstärktem Kunststoff aufgebracht.

US 6,786,233 B1 betrifft einen Profilträger mit einer Profilwand, die aus vier rechtwinklig aneinander anschließenden und an ihren Rändern miteinander verschweißten Stahlplatten besteht. Zu einem Zeitpunkt, zu welchem der Wandquerschnitt der Profilwand bereits geschlossen ist, werden auf wenigstens zwei der miteinander verschweißten Stahlplatten Versteifungslagen aus faserverstärktem Kunststoff aufgebracht.

DE 195 08 193 A1 offenbart die Herstellung eines Profilträgers in Form eines Rohres mit einer doppelten Rohrwand. Dabei wird zu einem Zeitpunkt, zu welchem sowohl der Wandquerschnitt des Innenrohrs als auch der Wandquerschnitt des Außenrohrs bereits geschlossen ist, auf die Außenseite des Innenrohrs eine Versteifungslage aus faserverstärktem Kunststoff aufgebracht. Mit der Ummantelung wird das Innenrohr in das Außenrohr eingeschoben. Anschließend härtet der faserverstärkte Kunststoff in dem Zwischenraum zwischen Innenrohr und Außenrohr aus.

Die Aufgabe der vorliegenden Erfindung besteht darin, ein Verfahren zur Herstellung einer für eine Werkzeugmaschine bestimmten Tragstruktur bereitzustellen, die mittels eines Profilträgers mit dauerhaft gewährleisteter Steifigkeit versteift ist.

Erfindungsgemäß gelöst wird diese Aufgabe durch das Herstellungsverfahren nach Patentanspruch 1.

Gemäß Patentanspruch 1 wird ein Profilträger hergestellt, der als Grundprofil ein geschlossenes Hohlprofil aufweist. Dabei werden das Grundprofil des Profilträgers und ein Versteifungskörper aus faserverstärktem Kunststoff an der Profilwand des Grundprofils miteinander verbunden, indem zu einem Zeitpunkt, zu welchem der Wandquerschnitt der Profilwand des Grundprofils noch nicht geschlossen ist, der Versteifungskörper in das Grundprofil eingebracht wird und wenigstens ein an einem Wandteil der Profilwand des Grundprofils vorgesehenes und sich in Querrichtung der Profilwand erstreckendes wandseitiges Formschlusselement und der Versteifungskörper unter Ausbildung einer parallel zu der Profilwand wirksamen formschlüssigen Verbindung von Versteifungskörper und Grundprofil in Querrichtung der Profilwand miteinander in Eingriff gebracht werden. Anschließend wird bei der Herstellung des Profilträgers wenigstens ein weiterer Wandteil der Profilwand zur Herstellung der Profilwand durch Laserschweißen mit dem mit dem Versteifungskörper versehenen Wandteil verbunden und dadurch der Querschnitt der Profilwand des Grundprofils geschlossen. Im Anschluss an die Herstellung des Profilträgers wird dieser mit der tragenden Grundstruktur der Tragstruktur der Werkzeugmaschine durch Laserschweißen verbunden.

Es wird demnach eine parallel zu der Profilwand des metallenen Grundprofils des Profilträgers wirksame Formschlussverbindung zwischen dem Grundprofil und dem zur Versteifung des Grundprofils vorgesehenen Versteifungskörper hergestellt. Zu diesem Zweck werden wenigstens ein Formschlusselement an der Profilwand und der Versteifungskörper in Querrichtung der Profilwand miteinander in Eingriff gebracht. Die Formschlusselemente sind makroskopischer Natur. Zusätzlich zu der Formschlussverbindung können zwischen dem Grundprofil und dem Versteifungskörper auch noch andersartige Verbindungen, beispielsweise eine Klebeverbindung, vorgesehen sein. Die Profilwand des Grundprofils kann vor der Herstellung der Verbindung mit dem Versteifungskörper chemisch und/oder physikalisch vorbehandelt werden. Denkbar sind insbesondere ein Ätzen der Profilwand, das Aufbringen eines Primers auf die Profilwand oder ein Aufrauen der Profilwand durch Sand- oder Glaskugelstrahlen.

Die formschlüssige Verbindung zwischen der Profilwand des Grundprofils und dem Versteifungskörper wird zu einem Zeitpunkt hergestellt, zu welchem der Wandquerschnitt der Profilwand des Grundprofils noch nicht geschlossen ist. Der Versteifungskörper wird demnach zu einem Zeitpunkt eingebracht, zu welchem der Wandteil, an den der Versteifungskörper angelegt werden muss, noch gut zugänglich ist. Erst nach dem Einbringen des Versteifungskörpers wird die Profilwand des Grundprofils geschlossen. Dabei ist der mit dem Laserschweißen verbundene gezielte Wärmeeintrag in die miteinander zu verbindenden Bauteile von Vorteil.

Die Formschlussverbindung verhindert dauerhaft eine parallel zu der Profilwand gerichtete Relativbewegung von Grundprofil und Versteifungskörper und sorgt auf diese Art und Weise dafür, dass der Versteifungskörper die ihm zukommende Versteifungswirkung dauerhaft entfalten kann. Dessen ungeachtet ist die Eigenmasse des im Rahmen des erfindungsgemäßen Verfahrens hergestellten Profilträgers aufgrund der Hybridstruktur und der damit verbundenen Verwendung von faserverstärktem Kunststoff verhältnismäßig gering. Gegenüber Strukturen ausschließlich aus faserverstärktem Kunststoff besitzt ein derartiger Profilträger einen erheblichen Kostenvorteil.

Erhalten bleibt die Formschlussverbindung zwischen dem Grundprofil und dem Versteifungskörper und somit die Versteifungswirkung des Versteifungskörpers insbesondere auch dann, wenn der Profilträger bei seiner Herstellung oder bei seiner späteren Verwendung einer Behandlung, etwa einer Wärmebehandlung, unterzogen wird, die herkömmliche (Klebe-) Verbindungen von Grundprofil und Versteifungskörper in Mitleidenschaft ziehen würde.

Die dauerhafte Steifigkeit und die gleichzeitig geringe Eigenmasse des Profilträgers macht sich die erfindungsgemäße Tragstruktur, insbesondere die erfindungsgemäße Führungseinrichtung für eine Bewegungseinheit einer Werkzeugmaschine, zunutze. Eine derartige Tragstruktur bedarf generell einer hinreichenden Steifigkeit. Eine Führungseinrichtung der genannten Art ist nur bei hinreichender Steifigkeit in der Lage, die betreffende Bewegungseinheit exakt zu führen. Gleichzeitig muss die Eigenmasse der Tragstruktur beziehungsweise der Führungseinrichtung möglichst gering sein. Eine hohe Steifigkeit bei gleichzeitig geringer Eigenmasse ist insbesondere dann erforderlich, wenn eine Führungseinrichtung mit der daran geführten Bewegungseinheit selbst bewegt wird, wie dies etwa bei Portalträgern von Werkzeugmaschinen der Fall sein kann.

Zur erfindungsgemäßen Herstellung einer Tragstruktur einer Werkzeugmaschine werden eine in der Regel in Leichtbauweise ausgeführte tragende Grundstruktur der Tragstruktur und ein in diesem Fall als Halbzeug verwendeter Profilträger durch Laserschweißen miteinander verbunden. Der Profilträger versteift die tragende Grundstruktur dauerhaft, ohne deren Eigenmasse über Gebühr zu erhöhen. Aufgrund des gezielten und räumlich eng begrenzten Wärmeeintrages in die miteinander zu verbindenden Bauteile eignet sich das Laserschweißen in besonderem Maße für die Verarbeitung des zuvor hergestellten Profilträgers, der aufgrund seines Kunststoffanteils eine gewisse Wärmeempfindlichkeit zeigt. Außerdem sorgt der Laserschweißprozess für eine wirksame Schubanbindung des Profilträgers an die Grundstruktur der Tragstruktur. Bei entsprechend großer Länge der zu versteifenden Grundstruktur kann es zweckmäßig sein, das Grundprofil des zur Versteifung der Grundstruktur eingesetzten Profilträgers aus mehreren vorzugsweise miteinander verschweißten Profilabschnitten zusammenzusetzen. Ein einheitlicher Versteifungskörper kann sich über die gesamte Länge des Grundprofils erstrecken.

Die Formschlusselemente zur Herstellung der formschlüssigen Verbindung von Versteifungskörper und Grundprofil können unterschiedlich ausgeführt sein.

Bevorzugtermaßen ist vorgesehen, dass wenigstens ein wandseitiges Formschlusselement als von der Profilwand zu dem Versteifungskörper hin vorstehender Formschlussvorsprung ausgebildet ist. Ergänzend oder alternativ besteht die Möglichkeit, wenigstens ein wandseitiges Formschlusselement als zu dem Versteifungskörper hin offene Formschlussaufnahme an der Profilwand auszuführen.

Aus mehreren Gründen ist es von Vorteil, dass wenigstens ein wandseitiges Formschlusselement in die Profilwand des Grundprofils eingeformt ist. Derartige Formschlusselemente lassen sich insbesondere durch einen einfachen Umformprozess erzeugen und bilden einen integralen und damit fest an die restliche Profilwand angebundenen Bestandteil des Grundprofils.

Bevorzugtermaßen ist außerdem wenigstens ein wandseitiges Formschlusselement mit der Profilwand des Grundprofils verbunden und/oder an der Profilwand des Grundprofils abgestützt. Beispielsweise kann wenigstens ein wandseitiges Formschlusselement mit der Profilwand des Grundprofils verschweißt oder verschraubt sein.

Eine besonders wirksame Formschlussverbindung von Versteifungskörper und Grundprofil ist realisiert, wenn an mehreren, vorzugsweise an sämtlichen unter einem Winkel zueinander verlaufenden Wandteilen der Profilwand des Grundprofils eine parallel zu der Profilwand wirksame formschlüssige Verbindung von Versteifungskörper und Grundprofil hergestellt wird.

Besonders steife Profilträger und somit Profilträger, die sich in besonderem Maße zur Versteifung von Tragstrukturen und Führungseinrichtungen eignen, ergeben sich, wenn an wenigstens zwei, vorzugsweise an sämtlichen Wandteilen der Profilwand ein wandseitiges Formschlusselement vorgesehen ist.

Besondere Ausführungsarten des erfindungsgemäßen Verfahrens nach Patentanspruch 1 ergeben sich aus den abhängigen Patentansprüchen 2 bis 3.

Grundsätzlich kann der Versteifungskörper bei der Herstellung der formschlüssigen Verbindung mit dem Grundprofil im noch unverfestigten oder im bereits verfestigten Zustand vorliegen. Die Verarbeitung des noch unverfestigten Versteifungskörpers bietet allerdings den Vorteil, dass sich beim anschließenden Verfestigen des Versteifungskörpers zwischen diesem und der Profilwand des Grundprofils eine Klebeverbindung ausbildet, die zusätzlich zu der Formschlussverbindung wirksam ist.

Gemäß Patentanspruch 2 werden im Rahmen des erfindungsgemäßen Verfahrens bei der Herstellung des Profilträgers das Grundprofil und der noch unverfestigte Versteifungskörper an der mit dem wenigstens einen wandseitigen Formschlusselement versehenen Profilwand des Grundkörpers derart aneinander angelegt, dass das wenigstens eine wandseitige Formschlusselement und der Versteifungskörper in Querrichtung der Profilwand ineinandergreifen. Zu diesem Zweck sind die Profilwand und der noch unverfestigte Versteifungskörper in Querrichtung der Profilwand relativ zueinander zu bewegen. Zur Erzeugung der Relativbewegung können entweder das Grundprofil oder der noch unverfestigte Versteifungskörper oder sowohl das Grundprofil als auch der noch unverfestigte Versteifungskörper im Querrichtung der Profilwand bewegt werden. Greifen das wenigstens eine wandseitige Formschlusselement und der noch unverfestigte Versteifungskörper in Querrichtung der Profilwand ineinander, so bedarf es zur Herstellung einer parallel zu der Profilwand wirksamen formschlüssigen Verbindung von Versteifungskörper und Grundprofil nur noch einer Verfestigung des Versteifungskörpers. Mit der Herstellung einer formschlüssigen Verbindung geht beim Aushärten des Versteifungskörpers die Herstellung einer Klebeverbindung von Versteifungskörper und Grundprofil einher.

Unabhängig von der Vorgehensweise bei der Herstellung der formschlüssigen Verbindung des noch nicht verfestigten Versteifungskörpers und des Grundprofils ist im Falle einer weiteren vorteilhaften Variante des erfindungsgemäßen Verfahrens vorgesehen, dass dem Profilträger mit dem Grundprofil und dem unverfestigten Versteifungskörper bis zur Verfestigung des Versteifungskörpers eine Sollform aufgeprägt wird (Patentanspruch 3). Auf diese Art und Weise wird sichergestellt, dass der Profilträger nach dem Verfestigen des Versteifungskörpers exakt die gewünschte Form besitzt, beispielsweise hochgradig gerade ist. Dieser Umstand ist insbesondere deshalb bedeutsam, weil der Profilträger für seine spätere Verwendung durch Laserschweißen mit der tragenden Grundstruktur der Tragstruktur der Werkzeugmaschine verbunden wird. Beim Laserschweißen darf der zwischen den miteinander zu verbindenden Bauteilen vorhandene und durch den Schweißvorgang zu schließende Spalt nur eine geringe Spaltweite besitzen. In Abhängigkeit von dem jeweiligen Anwendungsfall besteht erfindungsgemäß auch die Möglichkeit, dem Profilträger eine von der geradlinigen Form abweichende Form, beispielsweise eine definierte Krümmung, aufzuprägen.

Nachfolgend wird die Erfindung anhand beispielhafter schematischer Darstellungen näher erläutert. Es zeigen:
- Figuren 1 bis 3: den Ablauf eines nicht erfindungsgemäßen Verfahrens zur Herstellung eines Profilträgers mit einem Grundprofil und einem mit dem Grundprofil formschlüssig verbundenen Versteifungskörper,
- Figur 4: einen nach dem Verfahren gemäß den Figuren 1 bis 3 hergestellten Profilträger,
- Figur 5: den Profilträger gemäß Figur 4 als Teil einer als Führungseinrichtung für eine Bewegungseinheit einer Werkzeugmaschine ausgebildeten Tragstruktur,
- Figur 6: das Detail VI in Figur 5 und
- Figur 7: einen Profilträger mit einem Grundprofil und einem mit dem Grundprofil formschlüssig verbundenen Versteifungskörper zur Verwendung bei der erfindungsgemäßen Herstellung einer als Führungseinrichtung für eine Bewegungseinheit einer Werkzeugmaschine ausgebildeten Tragstruktur.

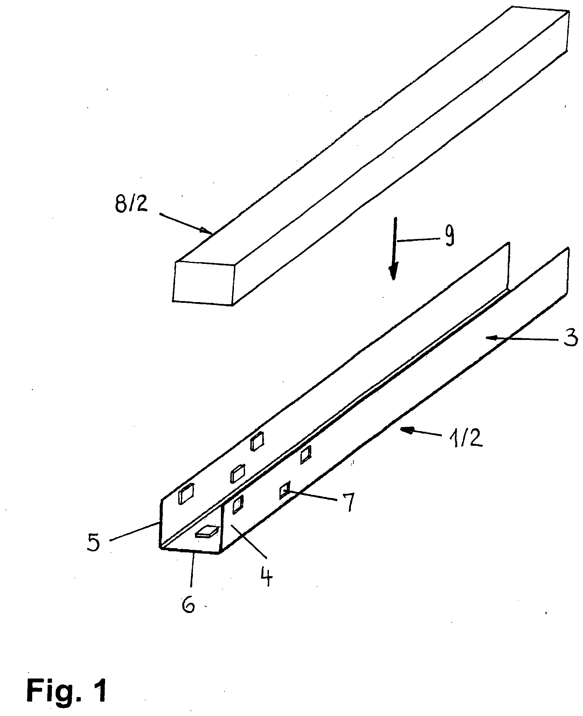

Gemäß Figur 1 besitzt ein als U-Profil ausgebildetes metallenes Grundprofil 1 eines Profilträgers 2 eine Profilwand 3 mit drei Wandteilen, im Einzelnen mit zwei U-Profilschenkeln 4, 5 und einer U-Profilbasis 6. Sowohl an den U-Profilschenkeln 4, 5 als auch an der U-Profilbasis 6 sind in das Grundprofilinnere vorragende Formschlusselemente 7 vorgesehen. Als Werkstoff für das Grundprofil 1 kommen beispielsweise Stahl, Aluminium oder Titan in Frage.

Die Formschlusselemente 7 wurden durch Umformen der Profilwand 3 erstellt. An der Außenseite der Profilwand 3 erscheinen die Formschlusselemente 7 als napfartige Vertiefungen mit Rechteckquerschnitt, an der Innenseite der Profilwand 3 als quaderförmige Formschlussvorsprünge. Andere Geometrien der Formschlusselemente 7 sind denkbar. Der Einfachheit halber ist in Figur 1 nur ein Teil der über die gesamte Länge des Grundprofils 1 verteilten Formschlusselemente 7 dargestellt.

Abweichend von den dargestellten Verhältnissen können an dem Grundprofil 1 auch nach außen vorstehende Wandvorsprünge vorgesehen sein, die als Formschlusselemente zu dem Innern des Grundprofils 1 hin offene Formschlussaufnahmen ausbilden.

Zur Versteifung des Grundprofils 1 dient ein Versteifungskörper 8, der in Figur 1 noch außerhalb des Grundprofils 1 angeordnet ist. Bei dem Versteifungskörper 8 handelt es sich um einen Gurt aus faserverstärktem Kunststoff. In dem dargestellten Beispielsfall sind an dem Versteifungskörper 8 unidirektionale Karbonfasern in eine Kunstharzmatrix eingebettet.

Zur Herstellung des Profilträgers 2 wird der Versteifungskörper 8 in noch unverfestigtem Zustand aus der Position oberhalb des Grundprofils 1 in Richtung eines Pfeils 9 in das Innere des Grundprofils 1 eingeführt und dort unter Druckbeaufschlagung an die Innenseite der Profilwand 3 angelegt. Infolge der Druckbeaufschlagung tauchen die Formschlusselemente 7 an der Innenseite der U-Profilschenkel 4, 5 und der U-Profilbasis 6 in das noch weiche Material des Versteifungskörpers 8 ein. Über die gesamte Kontaktfläche liegt der Versteifungskörper 8 eng an der Profilwand 3 an.

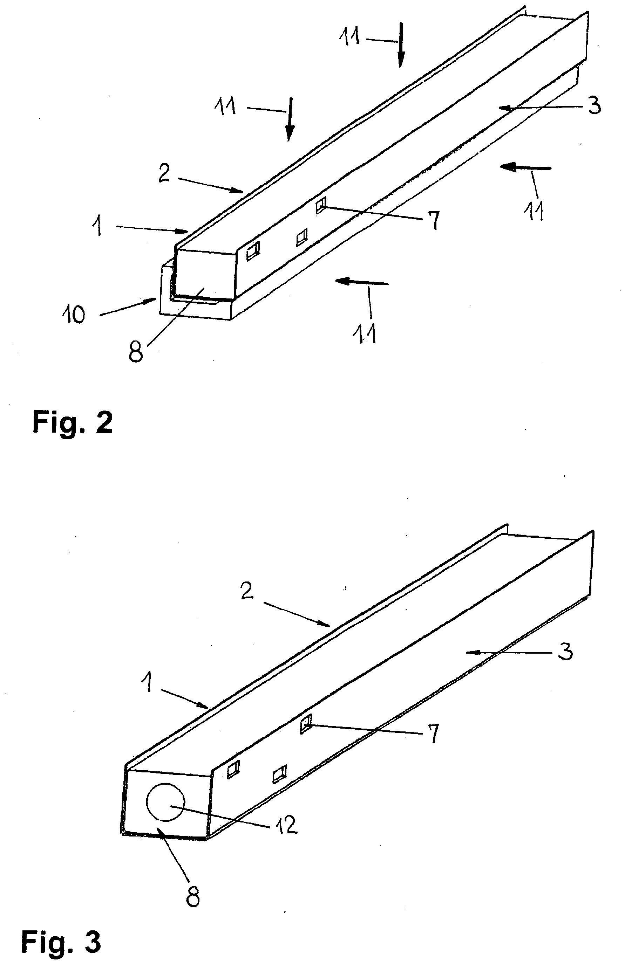

Mit dem darin aufgenommenen, noch unverfestigten Versteifungskörper 8 wird das Grundprofil 1 an einer Richtvorrichtung 10 angeordnet (Figur 2). An der Richtvorrichtung 10 wird die Einheit aus Grundprofil 1 und Versteifungskörper 8 mittels einer durch Pfeile 11 veranschaulichten Spannvorrichtung mit exakt geradem Verlauf eingespannt, bis der Versteifungskörper 8 ausgehärtet und dadurch verfestigt ist.

Bei Bedarf kann anstelle der Richtvorrichtung 10 auch eine Vorrichtung verwendet werden, welche der Einheit aus Grundprofil 1 und noch unverfestigtem Versteifungskörper 8 eine von der geraden Form abweichende Form aufprägt. Als von der geraden Form abweichende Form ist insbesondere eine Krümmung mit großem Krümmungsradius denkbar. Wird ein ursprünglich leicht gekrümmter Profilträger an seinem Einbauort mit geradlinigem Verlauf montiert, so bietet die ursprünglich leicht gekrümmte Form des Profilträgers eine einfache Möglichkeit zur Erzeugung einer Vorspannung an dem montierten Profilträger. Auch kann die ursprünglich leicht gekrümmte Form des Profilträgers dafür sorgen, dass sich der Profilträger an seinem Einbauort unter Last derart verformt, dass er geradlinig verläuft und dann beispielsweise eine den Profilträger belastende Bewegungseinheit geradlinig führen kann.

Nach dem Verfestigen des Versteifungskörpers 8 sorgen die wandseitigen Formschlusselemente 7 der Profilwand 3 durch ihren Eingriff in den verfestigten Versteifungskörper 8 für eine parallel zu der Profilwand 3 wirksame formschlüssige Verbindung von Grundprofil 1 und Versteifungskörper 8. Zusätzlich sind nach dem Aushärten des Versteifungskörpers 8 die Profilwand 3 und der Versteifungskörper 8 an ihrer Kontaktfläche miteinander verklebt. Aufgrund der Einspannung an der Richtvorrichtung 10 ist der Profilträger 2 nach dem Aushärten des Versteifungskörpers 8 optimal gerade. Anstelle des den Querschnitt des Grundprofils 1 nur teilweise ausfüllenden Versteifungskörpers 8 kann auch ein den Grundprofilquerschnitt vollständig ausfüllender Versteifungskörper vorgesehen sein.

Figur 3 veranschaulicht eine von den vorstehend beschriebenen Abläufen abweichende Möglichkeit zur Herstellung des Formschlusses zwischen dem Versteifungskörper 8 und dem Grundprofil 1 des Profilträgers 2.

Der Versteifungskörper 8 gemäß Figur 3 besitzt einen elastisch komprimierbaren Kern 12, der sich im Inneren des Versteifungskörpers 8 über dessen gesamte Länge erstreckt. Auf den Kern 12 ist der faserverstärkte Kunststoff des Versteifungskörpers 8 aufgebracht. Solange das Material des Versteifungskörpers 8 noch unverfestigt ist, lässt sich der Versteifungskörper 8 auf eine Querschnittsgröße zusammendrücken, die kleiner ist als der Querschnitt des Innenraums des Grundprofils 1. Mit derart reduziertem Querschnitt wird der Versteifungskörper 8 in das Grundprofil 1 eingelegt. Anschließend weitet sich der Kern 12 des Versteifungskörpers 8 infolge seiner Elastizität. Dadurch wird der Versteifungskörper 8 an die Innenseite der Profilwand 3 angedrückt. Dabei ergibt sich ein enger Kontakt zwischen dem Versteifungskörper 8 und der Profilwand 3 und die Formschlusselemente 7 an der Profilwand 3 tauchen in den noch unverfestigten faserverstärkten Kunststoff des Versteifungskörpers 8 ein.

Auch die in dieser Weise hergestellte Einheit aus Grundprofil 1 und noch unverfestigtem Versteifungskörper 8 wird an der Richtvorrichtung 10 bis zum Verfestigen des Versteifungskörpers 8 eingespannt.

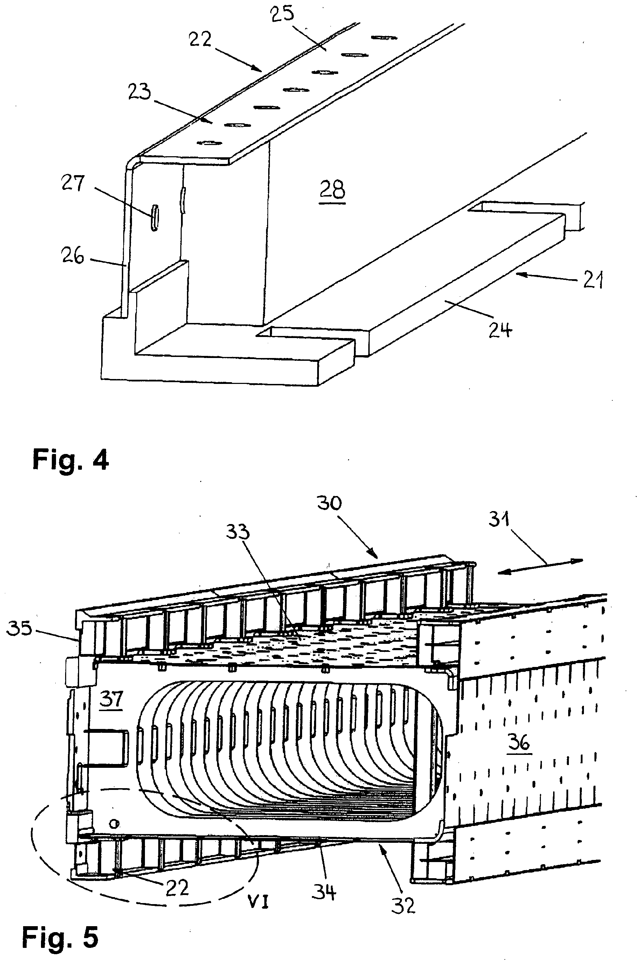

Nach dem anhand der Figuren 1 und 2 beschriebenen Verfahren ist auch ein in Figur 4 gezeigter Profilträger 22 hergestellt worden. Im Inneren eines als U-Profil ausgebildeten Grundprofils 21 mit Wandteilen in Form von U-Profilschenkeln 24, 25 und einer U-Profilbasis 26 ist ein Versteifungskörper 28 aus faserverstärktem Kunststoff angeordnet. Der verfestigte Versteifungskörper 28 ist mit einer Profilwand 23 des Grundprofils 21 formschlüssig verbunden und außerdem verklebt. Die formschlüssige Verbindung wird mittels Formschlusselementen 27 hergestellt, die durch Beaufschlagen der Profilwand 23 von der Außenseite her in diese eingeformt worden sind. Die Formschlusselemente 27 erscheinen an der Außenseite des Grundprofils 21 als napfartige Vertiefungen mit Kreisquerschnitt und an der Innenseite der Profilwand 23 als warzenartige zylindrische Formschlussvorsprünge. Auch der Profilträger 22 war während des Verfestigens des Versteifungskörpers 28 an der Richtvorrichtung 10 eingespannt und besitzt infolgedessen eine optimale Geradheit.

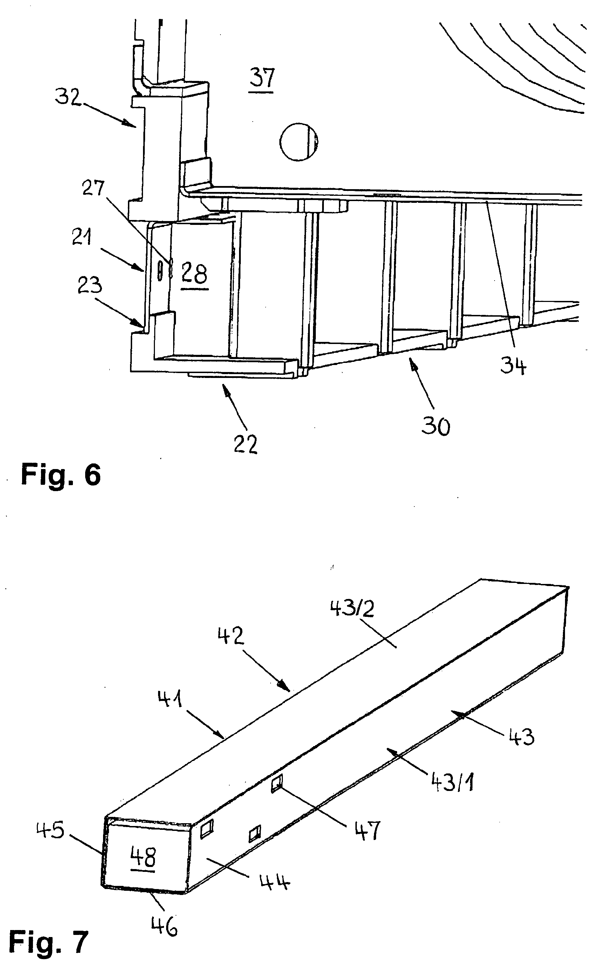

In den Figuren 5 und 6 ist der Profilträger 22 als Teil einer als Tragstruktur einer Werkzeugmaschine vorgesehenen Führungseinrichtung 30 dargestellt. Bei der Führungseinrichtung 30 handelt es sich um einen Portal-Querträger einer Laser-Flachbettmaschine für die schneidende Blechbearbeitung. In einer durch einen Doppelpfeil 31 veranschaulichten Längsrichtung führt die Führungseinrichtung 30 einen nicht gezeigten Laserschneidkopf bei dessen Bewegungen während der Blechbearbeitung.

Die Führungseinrichtung 30 besitzt eine kastenförmige Grundstruktur 32, die als Schweißkonstruktion in Leichtbauweise ausgeführt ist. Ein oberes Deckblech 33, ein unteres Deckblech 34, ein vorderes Seitenblech 35 und ein hinteres Seitenblech 36 sind miteinander zu einer im Querschnitt rechteckigen Schweißkonstruktion verbunden und in ihrem Inneren durch Schottbleche 37 versteift.

Zur Erhöhung der Biegesteifigkeit der kastenförmigen Grundstruktur 32 ist an der von dem vorderen Seitenblech 35 und dem unteren Deckblech 34 ausgebildeten Ecke der Grundstruktur 32 auf das untere Deckblech 34 der entsprechend abgelängte Profilträger 22 aufgesetzt und mit der Grundstruktur 32 über seine gesamte Länge durch Laserschweißen verbunden. Aufgrund der Anordnung an einer Ecke der Grundstruktur 32 lässt sich mit dem Profilträger 22 eine besonders gute Versteifungswirkung erzielen.

Für das Fügen mittels Laserschweißen war der Profilträger 22 in besonderem Maße geeignet. Denn aufgrund seiner Geradheit ergab sich vor dem Herstellen der Schweißverbindung zwischen dem Profilträger 22 und der Grundstruktur 32 ein Trennspalt mit einer geringen Spaltweite, wie sie für das Laserschweißen zwingend erforderlich ist. Nachdem beim Laserschweißen Wärme lediglich in einem räumlich eng begrenzten Bereich in die miteinander zu verbindenden Bauteile eingetragen wird, wurde durch den Schweißvorgang der Versteifungskörper 28, insbesondere dessen Anbindung an das Grundprofil 21 des Profilträgers 22, nicht in Mitleidenschaft gezogen. Infolgedessen kann der Profilträger 22 auch nach dem Verschweißen mit der Grundstruktur 32 der Führungseinrichtung 30 ohne Einschränkung eine versteifende Wirkung dauerhaft entfalten.

Figur 7 zeigt einen Profilträger 42, der sich von dem Profilträger 2 gemäß den Figuren 1 und 2 lediglich dadurch unterscheidet, dass eine Profilwand 43 eines Grundprofils 41 einen geschlossenen Wandquerschnitt aufweist.

Bei der Herstellung des Profilträgers 42 wurde zunächst wie bei der Herstellung des Profilträgers 2 verfahren. Ein noch unverfestigter Versteifungskörper 48 wurde in das Innere eines mit Formschlusselementen 47 versehenen U-förmigen Wandteils 43/1 der Profilwand 43 des Grundprofils 41eingelegt, der seinerseits Wandteile in Form zweier U-Profilschenkel 44, 45 und einer U-Profilbasis 46 umfasst. Nach dem Aushärten und dem Richten des zu diesem Zeitpunkt noch nach oben offenen Profilträgers 42 wurde dann zusätzlich ein ebener Wandteil 43/2 mit dem Wandteil 43/1 der Profilwand 43 durch Laserschweißen verbunden.

Die Formschlusselemente 47, die in ihrer Ausgestaltung den Formschlusselementen 7 gemäß den Figuren 1 und 2 entsprechen, sorgen an dem Profilträger 42 für eine parallel zu der Profilwand 43 wirksame formschlüssige Verbindung des Versteifungskörpers 48 und des Grundprofils 41. Außerdem ist der Versteifungskörper 48 mit dem Grundprofil 41 verklebt.

## Patentansprüche

1. Verfahren zur Herstellung einer Tragstruktur einer Werkzeugmaschine, insbesondere einer Führungseinrichtung (30) für eine Bewegungseinheit einer Werkzeugmaschine, mit einer tragenden Grundstruktur (32), die sich in Längsrichtung (31) der Tragstruktur, insbesondere der Führungseinrichtung (30), erstreckt sowie mit einem mit der tragenden Grundstruktur (32) verbundenen Profilträger (42), der sich gleichfalls in Längsrichtung (31) der Tragstruktur, insbesondere der Führungseinrichtung (30), erstreckt und der die tragende Grundstruktur (32) versteift, wobei der Profilträger (42) ein Grundprofil (41) aus Metall aufweist, das als Hohlprofil mit einer Profilwand (43) mit geschlossenem Wandquerschnitt ausgebildet ist,
**dadurch gekennzeichnet,**
**dass** der Profilträger (42) hergestellt wird,
• wobei das Grundprofil (41) des Profilträgers (42) und ein Versteifungskörper (48) aus faserverstärktem Kunststoff an der Profilwand (43) des Grundprofils (41) miteinander verbunden werden, indem zu einem Zeitpunkt, zu welchem der Wandquerschnitt der Profilwand (43) des Grundprofils (41) noch nicht geschlossen ist, der Versteifungskörper (48) in das Grundprofil (41) eingebracht wird und wenigstens ein an einem Wandteil (43/1) der Profilwand (43) des Grundprofils (41) vorgesehenes und sich in Querrichtung der Profilwand (43) erstreckendes wandseitiges Formschlusselement (47) und der Versteifungskörper (48) unter Ausbildung einer parallel zu der Profilwand (43) wirksamen formschlüssigen Verbindung von Versteifungskörper (48) und Grundprofil (41) in Querrichtung der Profilwand (43) miteinander in Eingriff gebracht werden und
• wobei anschließend wenigstens ein weiterer Wandteil (43/2) der Profilwand (43) zur Herstellung der Profilwand (43) durch Laserschweißen mit dem mit dem Versteifungskörper (48) versehenen Wandteil (43/1) verbunden und dadurch der Querschnitt der Profilwand (43) des Grundprofils (41) geschlossen wird und
**dass** der Profilträger (42) im Anschluss an seine Herstellung mit der tragenden Grundstruktur (32) durch Laserschweißen verbunden wird.

2. Verfahren nach Anspruch 1, **dadurch gekennzeichnet, dass** wenigstens ein wandseitiges Formschlusselement (47) und der Versteifungskörper (48) unter Ausbildung einer parallel zu der Profilwand (43) wirksamen formschlüssigen Verbindung von Versteifungskörper (48) und Grundprofil (41) in Querrichtung der Profilwand (43) miteinander in Eingriff gebracht werden, indem der eine Wandteil (43/1) des Grundprofils (41) und der im unverfestigten Zustand befindliche Versteifungskörper (48) an dem mit dem wenigstens einen wandseitigen Formschlusselement (47) versehenen einen Wandteil (43/1) der Profilwand (43) des Grundprofils (41) derart aneinander angelegt werden, dass das wenigstens eine wandseitige Formschlusselement (47) und der Versteifungskörper (48) in Querrichtung der Profilwand (43) ineinandergreifen.

3. Verfahren nach Anspruch 2, **dadurch gekennzeichnet, dass** dem Profilträger (42) mit dem Grundprofil (41) und dem unverfestigten Versteifungskörper (48) bis zur Verfestigung des Versteifungskörpers (48) eine Sollform aufgeprägt wird.

## Claims

1. Method for producing a carrier structure of a machine tool, in particular a guiding device (30) for a movement unit of a machine tool, comprising a carrying base structure (32) that extends in the longitudinal direction (31) of the carrying structure, in particular the guiding device (30), and further comprising a profile carrier (42) that is connected to the carrying base structure (32), also extends in the longitudinal direction (31) of the carrying structure, in particular the guiding device (30), and stiffens the carrying base structure (32), wherein the profile carrier (42) comprises a base profile (41) of metal being in the form of a hollow profile having a profile wall (43) with a closed wall cross section,
**characterised in that**
the profile carrier (42) is produced,
• wherein the base profile (41) of the profile carrier (42) and a reinforcement member (48) of fibre-reinforced plastics material are connected to each other on the profile wall (43) by, when the wall cross section of the profile wall (43) of the base profile (41) is not yet closed, the reinforcement member (48) is inserted into the base profile (41) and at least one wall-side positive-locking element (47) provided on a wall portion (43/1) of the profile wall (43) of the base profile (41) and extending in a transverse direction of the profile wall (43) and the reinforcement member (48) are brought into mutual engagement in the transverse direction of the profile wall (43) with a positive-locking connection between the reinforcement member (48) and the base profile (41) being produced, which positive-locking connection is effective parallel with the profile wall (43) and
• wherein, subsequently, for producing the profile wall (43) at least one further wall portion (43/2) of the profile wall (43) is connected to the wall portion (43/1) provided with the reinforcement member (48) by laser welding and the cross section of the profile wall (43) of the base profile (41) is thereby closed and
the profile carrier (42), following the production thereof, is connected to the carrying base structure (32) by laser welding.

2. Method according to claim 1, **characterised in that** at least one wall-side positive-locking element (47) and the reinforcement member (48) are brought into mutual engagement in the transverse direction of the profile wall (43) with a positive-locking connection between the reinforcement member (48) and the base profile (41) effective parallel with the profile wall (43) being produced by the one wall portion (43/1) of the base profile (41) and the reinforcement member (48) in an unsolidified state are brought into mutual contact on the wall portion (43/1) of the profile wall (43) of the base profile (41) provided with the at least one wall-side positive-locking element (47) such that the at least one wall-side positive-locking element (47) and the reinforcement member (48) engage into one another in the transverse direction of the profile wall (43).

3. Method according to claim 2, **characterised in that** a desired shape is impressed on the profile carrier (42) with the base profile (41) and the reinforcement member (48) in the unsolidified state until the reinforcement member (48) has solidified.

## Revendications

1. Procédé de fabrication d'une structure de support d'une machine-outil, notamment d'un dispositif de guidage (30) destiné à une unité motrice d'une machine-outil, comprenant une structure porteuse de base (32) qui s'étend dans la direction longitudinale (31) de la structure de support, en particulier du dispositif de guidage (30), ainsi qu'un support profilé (42) qui est relié à la structure porteuse de base (32), s'étend pareillement dans la direction longitudinale (31) de ladite structure de support, en particulier dudit dispositif de guidage (30), et rigidifie ladite structure porteuse de base (32), ledit support profilé (42) étant pourvu d'un profilé de base (41) en métal, réalisé sous la forme d'un profilé creux muni d'une paroi profilée (43) présentant une section transversale fermée,
**caractérisé par le fait**
**que** le support profilé (42) est fabriqué,
• sachant que le profilé de base (41) dudit support profilé (42), et un corps de rigidification (48) en matière plastique renforcée par des fibres, sont reliés l'un à l'autre sur la paroi profilée (43) dudit profilé de base (41) en ce sens que, à un instant auquel la section transversale de ladite paroi profilée (43) du profilé de base (41) n'est pas encore fermée, le corps de rigidification (48) est inséré dans ledit profilé de base (41), et que ledit corps de rigidification (48), ainsi qu'au moins un élément (47) de coopération par complémentarité de formes situé côté paroi, prévu sur une partie de cloisonnement (43/1) de la paroi profilée (43) dudit profilé de base (41) et s'étendant dans la direction transversale de ladite paroi profilée (43), sont mis en prise l'un avec l'autre dans ladite direction transversale de la paroi profilée (43) en instaurant, entre ledit corps de rigidification (48) et ledit profilé de base (41), une liaison par conformation agissant de manière efficace parallèlement à ladite paroi profilée (43), et
• sachant que, dans l'enchaînement, au moins une partie de cloisonnement additionnelle (43/2) de la paroi profilée (43) est reliée, par soudage au laser, à la partie de cloisonnement (43/1) dotée du corps de rigidification (48), de manière à produire ladite paroi profilée (43), la section transversale de ladite paroi profilée (43) dudit profilé de base (41) s'en trouvant ainsi fermée, et
**que**, dans la continuité de sa fabrication, ledit support profilé (42) est relié à la structure porteuse de base (32) par soudage au laser.

2. Procédé selon la revendication 1, **caractérisé par le fait qu'**au moins un élément (47) de coopération par complémentarité de formes situé côté paroi, et le corps de rigidification (48), sont mis en prise l'un avec l'autre dans la direction transversale de la paroi profilée (43) en instaurant, entre ledit corps de rigidification (48) et le profilé de base (41), une liaison par conformation agissant de manière efficace parallèlement à ladite paroi profilée (43), en ce sens que l'une (43/1) des parties de cloisonnement du profilé de base (41), et le corps de rigidification (48) à l'état non consolidé, sont mis mutuellement en applique au niveau de ladite partie de cloisonnement (43/1) de ladite paroi profilée (43) dudit profilé de base (41), pourvue dudit élément (47) de coopération par complémentarité de formes, à présence minimale côté paroi, de façon telle que ledit corps de rigidification (48) et ledit élément (47) de coopération par complémentarité de formes, à présence minimale côté paroi, s'interpénètrent dans ladite direction transversale de ladite paroi profilée (43).

3. Procédé selon la revendication 2, **caractérisé par le fait qu'**une forme ciblée est empreinte sur le support profilé (42) avec le profilé de base (41) et le corps de rigidification (48) non consolidé, jusqu'à la consolidation dudit corps de rigidification (48).
